Europäisches Patentamt

(19) European Patent Office

Office européen des brevets

(11) Veröffentlichungsnummer: **0 097 876**
**B1**

(12) **EUROPÄISCHE PATENTSCHRIFT**

(45) Veröffentlichungstag der Patentschrift:
08.04.87

(51) Int. Cl.⁴: **B 60 H 1/00,** G 05 G 7/04

(21) Anmeldenummer: **83105873.0**

(22) Anmeldetag: **15.06.83**

(54) Steuergerät für Heizungs- und Lüftungsanlagen in Kraftfahrzeugen.

(30) Priorität: 28.06.82 DE 3224272

(43) Veröffentlichungstag der Anmeldung:
11.01.84 Patentblatt 84/2

(45) Bekanntmachung des Hinweises auf die Patenterteilung:
08.04.87 Patentblatt 87/15

(84) Benannte Vertragsstaaten:
BE DE FR GB IT NL SE

(56) Entgegenhaltungen:
DE-A-2 246 240
DE-A-2 304 041
DE-A-2 852 452
DE-A-3 206 288
DE-B-1 655 102
DE-C-898 858
FR-A-2 220 829
FR-A-2 352 336
FR-A-2 446 737
GB-A-1 287 120
US-A-2 865 220
US-A-3 355 960

(73) Patentinhaber: **Siemens Aktiengesellschaft Berlin und München, Wittelsbacherplatz 2, D-8000 München 2 (DE)**

(72) Erfinder: **Hildebrand, Reinhard, Hauptstrasse 11, D-8627 Redwitz (DE)**
Erfinder: **Riedel, Friedrich, Untere Dorfstrasse 44, D-8627 Redwitz (DE)**

**Beschreibung**

Die Erfindung betrifft ein Steuergerät für Heizungs- und Lüftungsanlagen in Kraftfahrzeugen bestehend aus einem Kunststoffgrundkörper, mindestens einem durch einen Betätigungshebel über einen Zwischenhebel betätigten Stellhebel, der eine Führung aufweist. Derartige Vorrichtungen befinden sich überwiegend am Armaturenbrett von Kraftfahrzeugen.

In Kraftfahrzeugen kann gemäß einer bekannten Vorrichtung eine Regeleinrichtung mittels eines Bowdenzuges betätigt werden, wobei für die zwangsläufige Übertragung der Stellbewegung zwischen dem Betätigungsknopf und dem Befestigungspunkt des Bowdenzuges eine Hebelvorrichtung vorgesehen ist, die zwei Teile enthält, nämlich ein um eine feste Achse schwenkbares, das über eine Gleit- und gegebenenfalls Schwenkverbindung verbunden ist mit dem weiteren Teil. Der Befestigungspunkt des Bowdenzuges ist an einem der beiden Teile vorgesehen. Der Betätigungsknopf ist an dem anderen Teil angebracht (DE-PS 16 55 102). Es sind die Betätigungskräfte entweder nicht über den gesamten Hub gleichmäßig und demzufolge keine gleichmäßig leichte Bewegung des Stellhebels möglich oder es beruht der Übergang vom Stell- zum Betätigungshebel auf dem Prinzip der Linienberührung, woraus ein erhöhter Verschleiß resultiert. Gemäß der DE-OS 28 52 452 ist der Stellhebel für Lüftungsanlagen in Kraftfahrzeugen beidseitig zwischen sich in Stellrichtung erstreckenden Führungsflächen geführt. Die technische Ausgestaltung der Vorrichtung ist sehr aufwendig und besteht aus vielen Einzelteilen.

Aus der britischen Patentschrift 1 287 120 ist ein Steuergerät zur Heizungs- und Frischluftkontrolle in Kraftfahrzeugen bekannt mit einem Betätigungshebel, einem Kupplungshebel, zwei Kulissenhebeln und Führungsschlitzen.

Der Erfindung liegt die Aufgabe zugrunde, den Weg eines Betätigungshebels in den Weg eines Übertragungselementes umzusetzen, das ein Stellglied, beispielsweise eine Luftklappe, einen elektrischen Widerstand oder eine Spule ansteuert. Dabei soll der Wegverlauf des Übertragungselementes gegenüber dem Weg des Betätigungshebels je nach Anforderung variiert werden können. Ein zusätzlicher Kulissenhebel soll entfallen.

Diese Aufgabe wird dadurch gelöst, daß erfindungsgemäß in der Führung des Stellhebels eine in einer ortsfesten Führungsnut bestimmter Kennlinie bewegliche Führungsrolle mit einem Übertragungselement angeordnet ist. Der Verlauf der Führungsnut ist so ausgebildet, daß die vorgegebenen Stellwege über die Führungsrolle und das Übertragungselement erfüllt sind. Mit einer Ausführung gemäß der Erfindung kann die Führungnut variiert werden und es ist im Gegensatz zu den herkömmlichen Systemen beispielsweise für die Heizungskennlinie ein progressiver Bewegungsverlauf des Übertragungselementes möglich, was besonders günstig ist.

Durch die Führungsnut 9, die vorteilhafterweise im Grundkörper 7 angeordnet ist, wird eine Führungsrolle 5, beispielsweise ein Schlitten oder eine runde Scheibe, geführt. Die Führungsnut 9 kann durch ein Zusatzteil 11 gebildet sein.

Der Stellhebel 1 bewirkt den Antrieb der Führungsrolle 5. Die Führungsnut 9 bestimmt den Bewegungsablauf. Durch die Führung der Führungsrolle in der Nut wird eine direkte Übertragung des Stellweges des Betätigungshebels 2 in den Stellweg des Übertragungselementes 6 gewährleistet. Durch ein an der Führungsrolle 5 angebrachtes Bauteil, das in eine Führungsnut 9 eingreift, wird dem Übertragungselement 6 der gewünschte Weg gegeben. Eine Endlagenverriegelung ist erreicht, wenn die Längsachse des Zwischenhebels 3 mit der Führungsebene 12 des Betätigungshebels 2 in einer Endlage einen Winkel von 90° bildet. Die Führungsnut 9 kann im Grundkörper 7 integriert sein oder in einem Zusatzteil 11 eingebracht sein.

Gemäß einer bevorzugten Ausführungsform der Erfindung ist die Führungsrolle 5 mit einem Zapfen 10 versehen. Dieser greift in die Führungsnut ein, die im Grundkörper 7 oder in einem Zusatzteil 11 angebracht sein kann. Bei letzterer Ausführungsform ist das Zusatzteil am Grundkörper 7 befestigt.

An der Führungsrolle 5 kann beispielsweise ein Bowdenzug 13 oder ein Gestänge 6 anzuordnet sein. Durch die Verwendung eines Gestänges können direkt Stellglieder, z.B. Luftklappen, angesteuert werden.

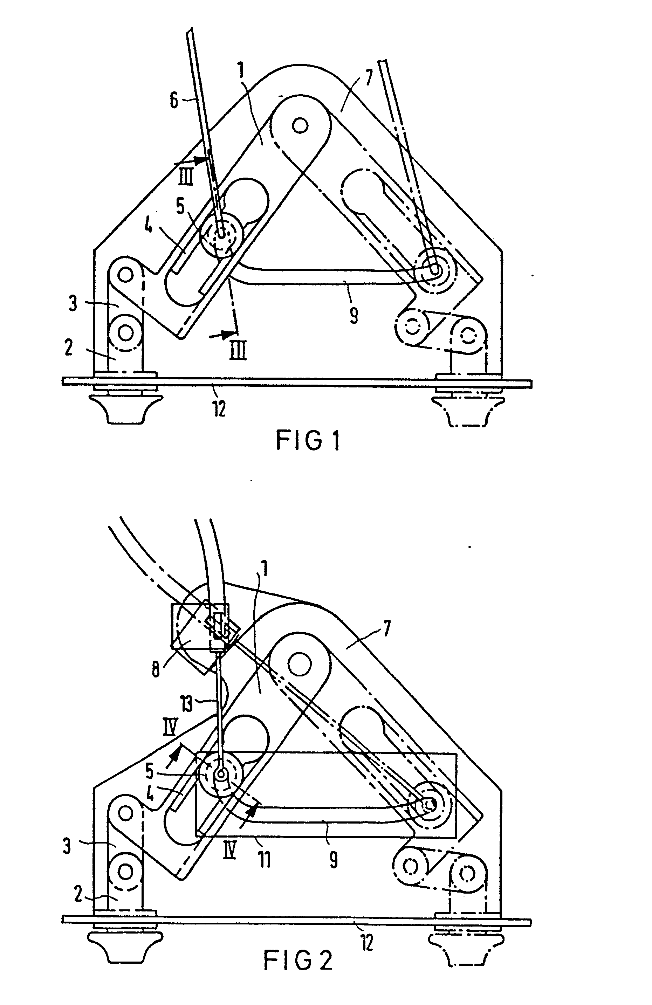

Bei Verwendung eines Bowdenzuges ist zusätzlich noch eine drehbar gelagerte Bowdenzugaufnahme 8 in den Grundkörper einzubringen oder im Grundkörper zu lagern (Figur 2).

Vorrichtungen gemäß der Erfindung eignen sich besonders als Steuerelemente für Luftklappen, elektrische Widerstände und Spulen.

Die Erfindung wird anhand der Zeichnung näher erläutert. Es zeigen

Figur 1 eine Draufsicht einer erfindungsgemäßen Vorrichtung.

Figur 2 eine Draufsicht einer weiteren erfindungsgemäßen Vorrichtung.

Figur 3 einen Schnitt längs der Linie III-III der Ausführung nach Figur 1.

Figur 4 einen Schnitt längs der Linie IV-IV einer Ausführung nach Figur 2.

Figur 5 eine erfindungsgemäße Kennlinie.

Bei einer Ausführung gemäß Figur 1 enthält die Vorrichtung einen Stellhebel 1, der über ein Zwischenglied 3 mit dem Betätigungshebel 2 verbunden ist. Der Stellhebel weist eine Führungsschiene 4 auf, in welcher die Führungsrolle 5 verschiebbar ist. In der Führungsrolle ist das Übertragungselement 6 befestigt. Ein auf der Führungsrolle 5 angebrachter, nach unten weisender Zapfen greift in die Führungsnut 9 ein und wird in dieser bewegt. Der Verlauf der Führungsnut wird so gestaltet, daß eine vorgegebene Kennlinie wie z.B. Figur 5 erreicht wird. Die Führungsnut befindet sich im Grundkörper 7.

In Figur 2 ist die Führungsnut 9 in einem Zusatzteil 11 angeordnet.

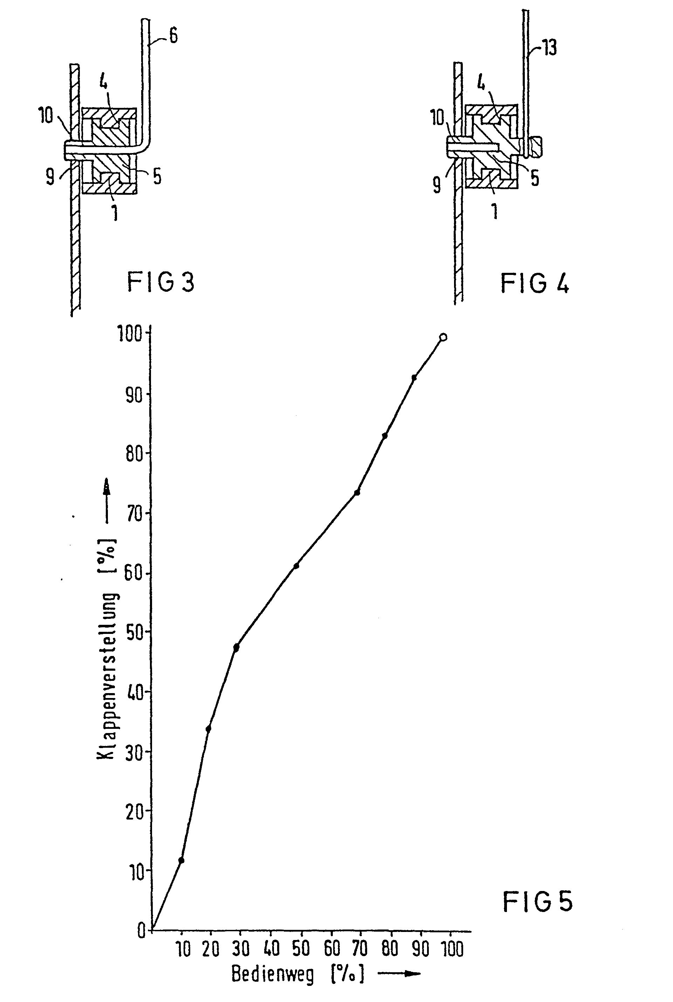

Figur 3 zeigt die Führungsrolle 5 der Figur 1 im Schnitt III-III. Der auf der Unterseite der Führungsrolle 5 angebrachte Zapfen ist mit 10 bezeichnet und das Übertragungselement ein Gestänge mit 6.

Figur 4 zeigt die Führungsrolle 5 der Figur 2 im Schnitt IV-IV. Das Übertragungselement ist ein Bowdenzug, dessen Öse an einem Dorn befestigt ist.

In Figur 5 ist als Beispiel eine Kennlinie für eine erfindungsgemäße Vorrichtung aufgezeichnet, die den Zusammenhang von Bedienweg und Klappenverstellung graphisch darstellt. Auf der Abszisse ist der Bedienweg und auf der Ordinate die Klappenverstellung jeweils in Prozent aufgetragen. Bei der gemäß der Erfindung ausgestalteten Führungsnut wird eine stufenlose Steuerung von beispielsweise der Heizleistung, der Luftzufuhr oder des elektrischen Widerstandes erreicht, wobei eine Abhängigkeit zwischen dem Bedienweg und beispielsweise der Heizleistung oder dem Widerstand besteht (vergleiche Figur 5).

**Patentansprüche**

1. Steuergerät für Heizungs- und Lüftungsanlagen in Kraftfahrzeugen, bestehend aus einem Kunststoffgrundkörper (7), mindestens einem durch einen Betätigungshebel (2) über einen Zwischenhebel (3) betätigten Stellhebel (1), der einer Führung (4) aufweist, dadurch gekennzeichnet, daß in der Führung (4) des Stellhebels eine in einer ortsfesten Führungsnut (9) bestimmter Kennlinie bewegliche Führungsrolle (5) mit einem Übertragungselement (6) angeordnet ist.

2. Steuergerät nach Anspruch 1, dadurch gekennzeichnet, daß der Verlauf der Führungsnut (9) so ausgelegt ist, daß die vorgegebenen Stellwege über die Führungsrolle (5) und das Übertragungselement (6) erfüllt sind.

3. Steuergerät nach Anspruch 1 und 2, dadurch gekennzeichnet, daß die Führungsnut (9) im Grundkörper (7) angebracht ist.

4. Steuergerät nach Anspruch 1 und 2, dadurch gekennzeichnet, daß die Führungsnut (9) in einem Zusatzteil (11) angebracht ist.

5. Steuergerät nach Anspruch 1 bis 4, dadurch gekennzeichnet, daß das Übertragungselement ein Gestänge (6) ist.

6. Steuergerät nach Anspruch 1 bis 4, dadurch gekennzeichnet, daß das Übertragungselement ein Bowdenzug (13) ist.

7. Steuergerät nach Anspruch 1 bis 6, dadurch gekennzeichnet, daß die Führungsrolle (5) mit einem Zapfen (10) versehen ist.

8. Steuergerät nach Anspruch 1 bis 7, dadurch gekennzeichnet, daß die Längsachse des Zwischenhebels (3) mit der Führungsebene (12) des Betätigungshebels (2) in einer Endlage einen Winkel von 90 ± 10° bildet.

**Claims**

1. Control device for heating and ventilating arrangements in motor vehicles, consisting of a plastic base (7), at least one setting lever (1) which has a guide (4) and which is operated by an operating lever (2) via an intermediate lever (3), characterised in that in the guide (4) of the setting lever there is arranged a guide roller (5) which is movable in a stationary guide groove (9) of a specific known path and which has a transmitting element (6).

2. A control device as claimed in Claim 1, characterised in that the course of the guide groove (9) is arranged to be such that the predetermined setting paths are achieved via the guide roller (5) and the transmitting element (6).

3. A control device as claimed in Claim 1 or 2, characterised in that the guide groove (9) is formed in the base (7).

4. A control device as claimed in Claim 1 or 2, characterised in that the guide groove (9) is formed in an additional component (11).

5. A control device as claimed in Claims 1 to 4, characterised in that the transmitting element is a lever mechanism (6).

6. A control device as claimed in Claims 1 to 4, characterised in that the transmitting element is a Bowden cable (13).

7. A control device as claimed in Claims 1 to 6, characterised in that the guide roller (5) is provided with a pin (10).

8. A control device as claimed in Claims 1 to 7, characterised in that the longitudinal axis of the intermediate lever (3) and the guide plane (12) of the operating lever (2) form an angle of 90° ± 10° in an end position.

**Revendications**

1. Appareil de commande pour des installations de chauffage et de ventilation dans des véhicules automobiles, constitué par un corps de base en matière plastique (7) et par au moins un levier de réglage (1), qui est actionné par un levier de manoeuvre (2) par l'intermédiaire d'un levier intercalaire (3) et comporte un guidage (4), caractérisé par le fait qu'un galet de guidage (5), qui est déplaçable dans une rainure fixe de guidage (9) correspondant à une courbe caractéristique déterminée et comporte un organe de transmission (6), est disposé dans le guide (4) du levier de réglage.

2. Appareil de commande suivant la revendication 1, caractérisé par le fait que la forme de la rainure de guidage (9) est agencée de manière à fournir les trajets prédéterminés de réglage par l'intermédiaire du galet de guidage (5) et de l'organe de transmission (6).

3. Appareil de commande suivant les revendications 1 et 2, caractérisé par le fait que la rainure de guidage (9) est ménagée dans le corps de base (7).

4. Appareil de commande suivant les revendications 1 et 2, caractérisé par le fait que la rainure de guidage (9) est ménagée dans une pièce supplémentaire (11).

5. Appareil de commande suivant les revendications 1 à 4, caractérisé par le fait que l'organe de transmission est une tringlerie (6).

6. Appareil de commande suivant les revendications 1 à 4, caractérisé par le fait que l'organe de transmission est un câble Bowden (13).

7. Appareil de commande suivant les revendications 1 à 6, caractérisé par le fait que le galet de guidage (5) est muni d'un téton (10).

8. Appareil de commande suivant les revendications 1 à 7, caractérisé par le fait que l'axe longitudinal du levier intercalaire (3) fait un angle de 90 ± 10° avec le plan de guidage (12) du levier de manoeuvre (2), dans une position d'extrémité.

FIG 1

FIG 2

FIG 3

FIG 4

FIG 5